Europäisches Patentamt

(19) European Patent Office

Office européen des brevets

(11) Veröffentlichungsnummer: **0 044 505**
**B1**

(12) **EUROPÄISCHE PATENTSCHRIFT**

(51) Int. Cl.⁴: **A 01 D 61/00**

(45) Veröffentlichungstag der Patentschrift:
**10.04.85**

(21) Anmeldenummer: **81105488.1**

(22) Anmeldetag: **14.07.81**

(54) Erntebergungsmaschine mit einer Erntebergungsvorrichtung.

(30) Priorität: **18.07.80 US 170263**

(43) Veröffentlichungstag der Anmeldung:
**27.01.82 Patentblatt 82/4**

(45) Bekanntmachung des Hinweises auf die Patenterteilung:
**10.04.85 Patentblatt 85/15**

(84) Benannte Vertragsstaaten:
**DE FR IT**

(56) Entgegenhaltungen:
**DE - A - 1 482 930**
**FR - A - 1 267 842**
**FR - A - 1 518 696**
**FR - A - 1 577 198**
**US - A - 1 733 839**
**US - A - 2 390 680**
**US - A - 2 476 265**
**US - A - 3 144 282**
**US - A - 3 977 164**

(73) Patentinhaber: **DEERE & COMPANY, 1 John Deere Road, Moline Illinois 61265 (US)**

(72) Erfinder: **Anderson, Sidney Elmer, Route 3, Geneseo, Illinois 61265 (US)**

(74) Vertreter: **Sartorius, Peter et al, DEERE & COMPANY European Office, Patent Department Postfach 503 Steubenstrasse 36-42, D-6800 Mannheim 1 (DE)**

ACTORUM AG

## Beschreibung

Die Erfindung bezieht sich auf eine Ernteberungsmaschine mit einer Ernteberungsvorrichtung, die mindestens zwei Querförderer aufweist, die einenends im Bereich von Seitenwänden der Ernteberungsvorrichtung, anderenends im Bereich der einander zugewandten Enden der beiden Querförderer von je einem Lager drehbar aufgenommen sind, die sich an mindestens einer sich nach oben erstreckenden, an der Ernteberungsvorrichtung angeschlossenen Tragvorrichtung abstützen.

Es ist ein Mähdrescher bekannt (DE-A-1 482 930), dessen Mähvorrichtung mindestens zwei nebeneinanderliegende um mindestens eine in Fahrtrichtung liegende Achse schwenkbare Teile mit je einem Querförderer aufweist, wobei die Querförderer im Bereich der einander zugewandten Enden von je einem sich nach oben erstreckenden Träger aufgenommen sind. Mit einer derartigen Vorrichtung lassen sich zwar relativ lange Querförderer lagern; da jedoch dem inneren Ende des entsprechenden Querförderers je ein Träger zugeordnet ist, ist die Vorrichtung aufwendig und teuer. Ausserdem ist der Ein- und Ausbau derartiger Querförderer kompliziert und zeitaufwendig, da die Enden des Querförderers sich nur axial in die Träger einsetzen lassen.

Ferner ist ein Querförderer für die Ernteberungsvorrichtung eines Mähdreschers bekannt (US-A-3 977 164), der im mittleren Bereich über eine einzige Tragvorrichtung zusätzlich abgestützt ist, die an einen Querrahmen der Ernteberungsvorrichtung angeschlossen ist. Da die linken und rechten Teile des Querförderers mittig über Schraubenbolzen fest verbunden sind, lässt sich der Ein- und Ausbau eines einzelnen Teiles des Querförderers nicht ohne weiteres durchführen.

Demgegenüber liegt der Erfindung die Aufgabe zugrunde, die Tragvorrichtung und die einander zugewandten Enden zweier koaxial zueinander ausgerichteter Querförderer einer Ernteberungsvorrichtung derart auszubilden, dass neben einer einfachen, sicheren Lagerung ein schneller Ein- und Ausbau der Querförderer möglich ist.

Diese Aufgabe wird bei einer Ernteberungsvorrichtung der eingangs genannten Art dadurch gelöst, dass jeweils das innenliegende Lager eines Querförderers ein Lagerelement aufweist, das quer zur Achse des Querförderers an ein zumindest an einer Seite offenes, als Kupplungselement ausgebildetes Tragelement der Tragvorrichtung heranführbar und in dieses einsetzbar ist. Durch die vorteilhafte Ausbildung der Lager für die einander zugewandten Enden der beiden Querförderer lassen sich nach Montage der äusseren Enden der Querförderer an den Seitenwänden der Ernteberungsvorrichtung die inneren Lager an die Tragvorrichtung heranschwenken und dann mit der Stirnseite der Tragvorrichtung ohne weiteres verbinden. Anstelle nur einer Tragvorrichtung können bei sehr breiten Ernteberungsvorrichtungen auch mehrere Tragvorrichtungen vorgesehen werden. Da die Tragvorrichtung mit einem nach einer Seite hin offenen Kupplungselement ausgerüstet ist, kann das Lagerelement auf einfache Weise seitlich in das Kupplungselement eingeschoben werden, bis das Lagerelement derart gegen das Kupplungselement anliegt, dass eine weitere Verstellung des Lagerelementes des entsprechenden Querförderers nicht mehr möglich ist. Hierdurch erhält man auf einfache Weise eine Arretierung des Lagerelementes in dem zugehörigen Kupplungselement, das mit der Tragvorrichtung verbunden ist. Hierzu ist es vorteilhaft, dass die koaxial zueinander verlaufenden und dicht nebeneinanderliegenden Lager an den innenliegenden Enden der Querförderer durch die Tragvorrichtung getrennt sind und auf Abstand gehalten werden. Da vorzugsweise lediglich eine Tragvorrichtung zwischen den beiden einander gegenüberliegenden Enden der beiden Querförderer vorgesehen ist, erhält man bis in den Bereich der Tragvorrichtung eine einwandfreie Förderung des Erntegutes, so dass eine gute und gleichmässige Beschickung der Einlassöffnung mit Erntegut stets gewährleistet ist. Hierzu ist es vorteilhaft, dass die innenliegenden Enden der Querförderer mit sich an Schneckenwendeln des Querförderers anschliessenden und sich radial erstreckenden, bis zur Stirnseite der Tragvorrichtung reichenden Schaufelblättern ausgerüstet sind, die das Erntegut durch eine Einlassöffnung bewegen. Durch die besonders günstige Ausgestaltung der Lagerelemente an den innenliegenden Enden der Querförderer können die auf dem Schneckenkern des Querförderers vorgesehenen Schaufelblätter bis in den Bereich der Stirnseite der Tragvorrichtung herangeführt werden, um somit eine gleichmässige Beschickung der Einlassöffnung sicherzustellen.

Vorteilhaft ist es ferner, dass die Tragvorrichtung im Bereich der Einlassöffnung vorgesehen ist, der eine Haube zugeordnet ist, die gelenkig an einem Querrahmen angeschlossen ist und sich nach vorne und unten über den oberen Teil der Einlassöffnung und die Tragvorrichtung erstreckt. Um einen besseren Zugang zur Tragvorrichtung zu erhalten, lässt sich die Abdeckvorrichtung ohne weiteres nach oben verschwenken, so dass der Ein- und Ausbau der beiden Querförderer durch die Abdeckvorrichtung nicht behindert wird und sich somit in kürzester Zeit durchführen lässt.

Nach einem weiteren Merkmal der Erfindung ist es vorteilhaft, dass die Lagerelemente je eine Lagerplatte mit mindestens zwei Führungsflächen und die Tragvorrichtung das Kupplungselement mit zwei Anlageflächen aufweisen, wobei das Kupplungselement in Verbindung mit den Anlageflächen eine Kupplungstasche für die Lagerplatte bildet. Vorteilhaft ist es ausserdem, dass das Kupplungselement mit zwei parallel zu den Führungsflächen verlaufenden Tragflächen ausgerüstet ist, die von Arretierungslippen und von parallel dazu verlaufenden Tragflächen der Tragvorrichtung begrenzt werden. Ferner ist es vorteilhaft, dass die Arretierungslippen mit ihren Tragflächen und den Tragflächen der Tragvorrichtung zwei Führungsnuten bilden, die divergierend zueinander verlaufen und die Einschubbewegung der Lagerplatte begrenzen. Durch die vorteilhafte Ausbildung des Kupplungselementes erhält man beim Einführen der Lagerplatte in das Kupplungselement gleichzeitig ein selbsttätiges Ausrichten der Enden der Querförderer mittels der Führungsflächen des Kupplungselementes, so dass die Querförderer im eingebauten Zustand ohne weiteres untereinander fluchten. Nachdem die Lagerplatte in das Kupplungselement eingeschoben ist, lässt sie sich auf einfache Weise sichern. Hierzu ist es vorteilhaft, dass die Tragvorrichtung mit einer Arretierungsvorrichtung für die Lagerplatte versehen ist. Es ist ausserdem vorteilhaft, dass die Arretierungsvorrichtung ausserhalb des Aussenumfangs eines Schneckenkerns des Querförderers vorgesehen ist. Da die Arretierungsvorrichtung bzw. der zugehörige Schraubenbolzen ausserhalb des Aussenumfanges des Schneckenkerns des Querförderers vorgesehen ist, lässt sich der Schraubenbolzen ohne weiteres an der Tragvorrichtung festmachen.

Nach einem anderen Merkmal der Erfindung ist es vorteilhaft, dass die durch die beiden Führungsnuten verlaufende Mittellinie mit einer Rückwand der Erntebergungsvorrichtung einen nach oben offenen, spitzen Winkel bildet und die Lagerplatte beim Kupplungsvorgang auf der gleichen Ebene wie die Mittellinie verstellbar ist. Durch die vorteilhafte Lage der beiden konvergierend zueinander angeordneten Nuten der Kupplungsvorrichtung lässt sich die Lagerplatte des entsprechenden Querförderers ohne weiteres von vorne und von oben in das Kupplungselement einschieben. Dabei ist es vorteilhaft, dass der Querförderer an seinen inneren Enden mit einem Wellenzapfen versehen ist, der sich teleskopartig in das Lagerelement erstreckt. Da der Wellenzapfen auch im eingebauten Zustand axial verschiebbar in dem Lagerelement aufgenommen ist, können bei Toleranzabweichungen Biege- und Zugbeanspruchung des Querförderers bzw. von dessen Teilen vermieden werden.

Nach einem weiteren Merkmal der Erfindung ist es vorteilhaft, dass an der Tragvorrichtung eine ringförmige, die inneren Enden des Schneckenkerns überdeckende Abdeckvorrichtung angeordnet ist, die einen oberen abnehmbaren Teil aufweist, die eine Montageöffnung abdeckt. Vorteilhaft ist es ausserdem, dass der obere Teil der Abdeckvorrichtung zur Aufnahme der Tragvorrichtung einenends mit einem Schlitz sowie einer Öse und anderenends mit einem Hakenteil versehen ist, wobei der Hakenteil in ein am unteren Teil der Abdeckvorrichtung vorgesehenes Aufnahmeteil einsteckbar ist.

Vorteilhaft ist es ferner, dass in der Lagerplatte ein Wälzlager vorgesehen ist, dessen Aussenring fest mit der Lagerplatte verbunden ist, wobei die Lagerplatte zwischen der Stirnseite des Querförderers und der Stirnseite der Tragvorrichtung angeordnet werden kann.

Nach einem weiteren Merkmal der Erfindung ist es vorteilhaft, dass die Tragvorrichtung aus einem oberen, an den Querrahmen angeschlossenen Tragarm und einer unteren vertikalen Tragplatte besteht, die über Stellmittel in vertikaler und horizontaler Ebene am oberen Tragarm verstellbar gelagert ist, und dass die äusseren Enden des Querförderers mittels Wälzlagern in den Seitenwänden der Erntebergungsvorrichtung lösbar bzw. einsteckbar gelagert sind. Durch die Verwendung von Stellmitteln, die eine Verbindung zwischen dem vertikal verlaufenden Teil und dem nach vorne geneigt verlaufenden Teil der Tragvorrichtung herstellen, lassen sich die einander zugewandten Enden der beiden Querförderer genau zueinander ausrichten.

In der Zeichnung ist ein Ausführungsbeispiel einer Erntebergungsvorrichtung nach der Erfindung schematisch dargestellt.

Es zeigt:

Fig. 1 eine Draufsicht einer Erntebergungsvorrichtung;

Fig. 2 eine Teilansicht der Erntebergungsvorrichtung mit einer Einzugsschnecke 16;

Fig. 3 eine Teilansicht im Schnitt entlang der Linie 3–3 gemäss Fig. 2;

Fig. 4 eine Teilansicht im Schnitt entlang der Linie 4–4 gemäss Fig. 3;

Fig. 5 Teile des Lagers der Einzugsschnecke;

Fig. 6 einen Längsschnitt entlang der Linie 6–6 gemäss Fig. 5;

Fig. 7 den oberen Teil einer Abdeckvorrichtung für die Einzugsschnecke;

Fig. 8 eine Draufsicht der Abdeckvorrichtung gemäss Fig. 7.

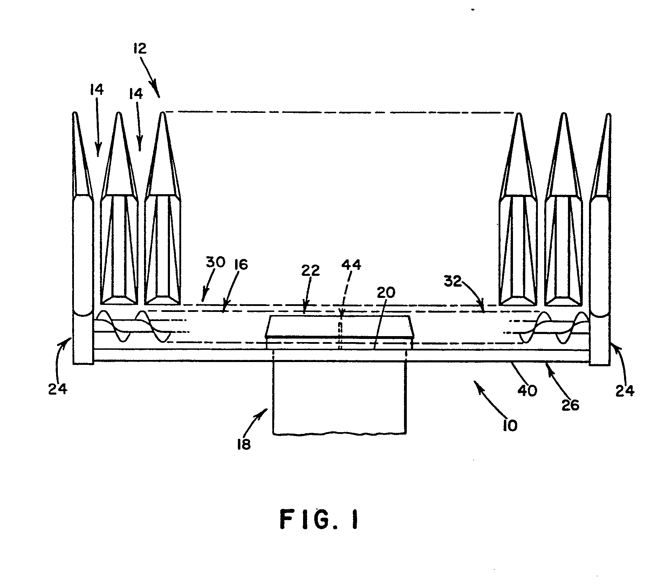

In der Zeichnung ist eine Pflückeinrichtung für eine Erntemaschine dargestellt, die beispielsweise mit 12 nebeneinander angeordneten Pflückern (Fig. 1) ausgerüstet sein kann. Die in der Zeichnung dargestellte Pflückeinrichtung 12 lässt sich jedoch auch für andere Maschinen, beispielsweise für Schwadableger, einsetzen.

Die Erntebergungsvorrichtung ist an einen Hauptrahmen 10 angeschlossen und mit zahlreichen nebeneinander angeordneten Pflückeinrichtungen 12 ausgerüstet, die je einen Einzugskanal 14 aufweisen, durch den das Erntegut beim Ernteeinsatz geführt wird, um dann von einer Einzugsschnecke 16 erfasst zu werden, die sich am Ende des Einzugskanals anschliesst. Die Erntebergungsvorrichtung mit den einzelnen Pflückeinrichtungen 12 ist an ein Schrägfördergehäuse 18 angeschlossen, das in der Zeichnung gemäss Fig. 1 nur angedeutet ist. Das von der Einzugsschnecke 16 erfasste Erntegut wird zur Mitte zusammengezogen und über eine Einlassöffnung 20 dem Schrägfördergehäuse 18 zugeführt. Der Einzug des Erntegutes und die Abgabe in das Schrägfördergehäuse 18 wird durch eine Abdeckvorrichtung 22 unterstützt, die sich oberhalb der Einzugsschnecke 16 befindet und sich von der Einlassöffnung 20 nach vorne erstreckt. Die Erntebergungsvorrichtung weist rechte und linke Seitenteile 24 auf, in denen die äusseren Enden der Einzugsschnecke 16 drehbar gelagert sind. Der hintere Teil der Erntebergungsvorrichtung wird durch eine Rückwand 26 begrenzt.

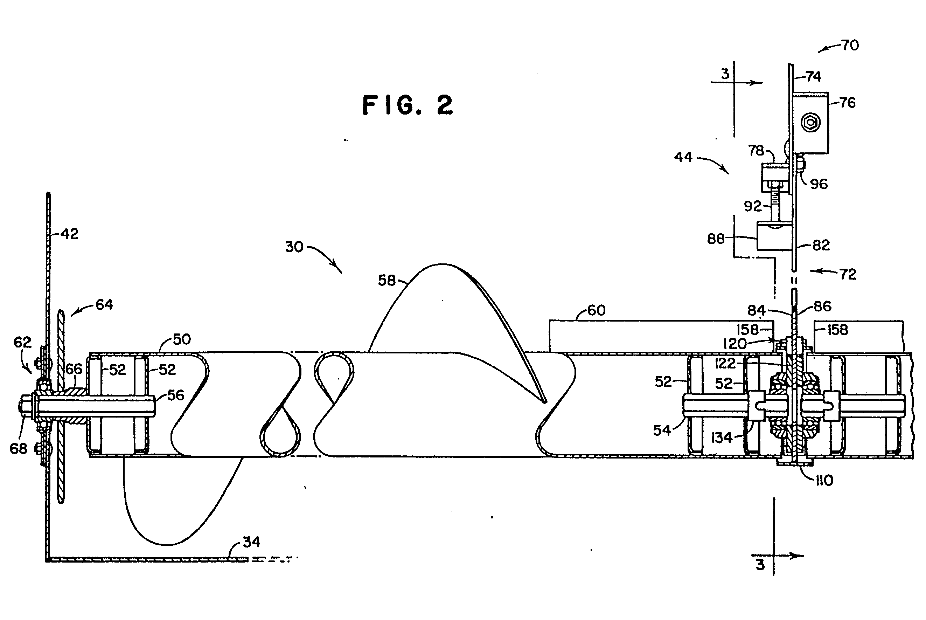

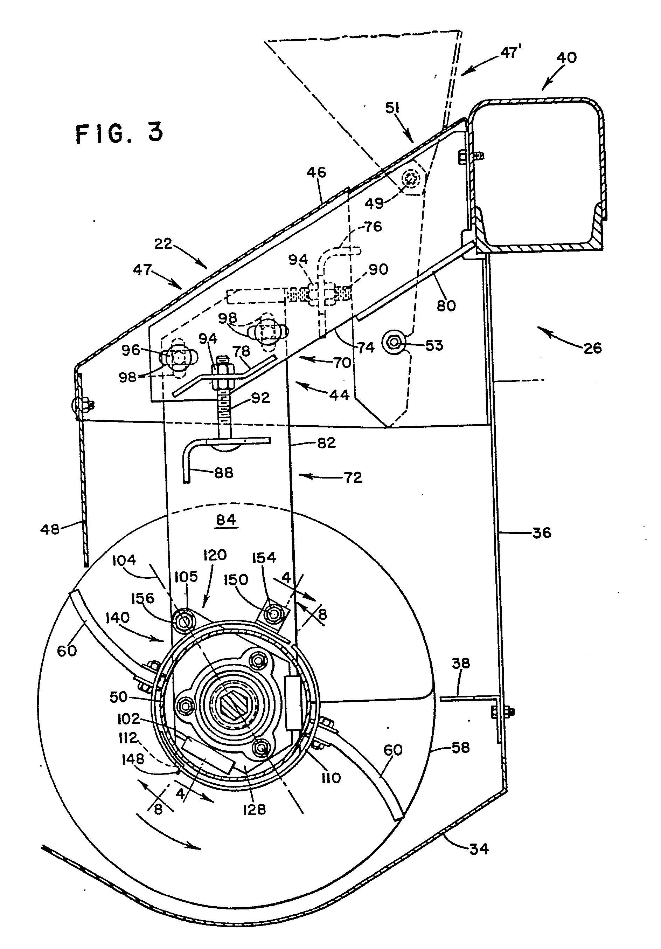

Die Einzelheiten der Einzugsschnecke 16 sind in Fig. 2 und 3 veranschaulicht.

Die Einzugsschnecke 16 ist mit linken und rechten Schneckeneinzugsteilen 30 und 32, die als Querförderer wirken, ausgerüstet, die mit dem Boden 34 und der Rückwand 36 der Erntebergungsvorrichtung zusammenwirken. Hierzu gehört auch eine Abstreifleiste 38, die an der Rückwand 36 befestigt ist und sich in den Bereich des Rotationskreises der Einzugsschnecke 16 erstreckt. Die Rückwand 36 sowie eine Abdeckvorrichtung 22 sind an einen Querrahmen 40 angeschlossen und überspannen die gesamte Breite der Erntebergungsvorrichtung. Ein jedes Schneckeneinzugteil 30 und 32 lagert mit seinen äusseren Enden in Seitenwänden 42 der Seitenteile 24 der Erntebergungsvorrichtung.

Die inneren Enden der Schneckeneinzugsteile 30 und 32 sind in einer mit Bezug auf die Erntebergungsvorrichtung mittig angeordneten Tragvorrichtung 44 aufgenommen, die ebenfalls mit dem Querrahmen 40 fest verbunden ist (Fig. 1). Die mittlere Tragvorrichtung 44 ist mittels der Abdeckvorrichtung 22 abgedeckt, die aus einem nach vorne und unten geneigt verlaufenden Paneel 46 und einem in etwa vertikalverlaufenden Paneel 48 besteht, das an das vordere Ende des Paneels 46 lösbar angeschlossen ist. Das vordere Paneel 48 erstreckt sich mit seiner unteren Kante bis in den Bereich des Rotationskreises der Schneckeneinzugsteile 30 und 32. Das obere und vordere Paneel 46 und 48 bilden eine schwenkbar gelagerte Haube 47, die mittels eines Gelenkes 49 an einen feststehenden Teil 51 der Abdeckvorrichtung 22 angeschlossen ist, so dass die Haube 47 in eine Stellung 47' gemäss Fig. 3 verschwenkt werden kann. Im Arbeitseinsatz ist die Haube 47 nach unten verschwenkt und wird mittels einer Befestigungsvorrichtung 53 gesichert.

Da die Schneckeneinzugsteile 30 und 32 einander gleich sind, wird in der nachfolgenden Beschreibung lediglich das Schneckeneinzugsteil 30 näher beschrieben und in Fig. 2 veranschaulicht. Das Schneckeneinzugsteil 30 weist einen Schneckenkern 50 auf, der endseitig mit zwei nebeneinanderliegenden Stirnflanschen 52 ausgerüstet ist, die jeweils zur Aufnahme eines inneren und äusseren sechskantförmigen Zapfens 54 und 56 dienen, die koaxial zum Schneckenkern 50 verlaufen. Auf dem Schneckenkern 50 sind Schneckenwendeln 58 angeordnet, die sich fast über die gesamte Länge des Schneckenkerns 50 erstrecken. Am inneren Ende der Schneckenwendel 58 schliesst sich ein kurzes Schaufelblatt 60 an, das sich bis in den Bereich der Stirnseite der Tragvorrichtung 44 erstreckt. Wie insbesondere aus Fig. 2 und Fig. 3 hervorgeht sind lediglich zwei Schaufelblätter 60 dargestellt, die gegenüberliegend angeordnet sind. Es ist jedoch auch möglich, mehrere Schaufelblätter am Schneckenkern 50 anzuschliessen. Die Schaufelblätter 60 unterstützen die Beschickung der Einlassöffnung 20 mit Erntegut. Das äussere Ende des Zapfens 56 ist in einem Wälzlager 62 aufgenommen, das an die Seitenwand 42 lösbar angeschlossen ist. Zwischen der aussenliegenden Stirnseite des Schneckeneinzugsteils 30 und der Seitenwand 42 befindet sich ein Kettenrad 64 zum Antrieb des Schneckeneinzugsteiles 30.

Die mit Bezug auf die Erntebergungsvorrichtung mittig angeordnete Tragvorrichtung 44 weist ein oberes Tragteil 70 auf, das an dem Querrahmen 40 fest angeschlossen ist. An dem oberen Tragteil 70 schliesst sich ein in etwa vertikalverlaufendes unteres Tragteil 72 an, zu dem eine vertikalverlaufende Tragplatte 82 (Fig. 2) gehört. An den beiden aussenliegenden Oberflächen des Tragarmes 74 befindet sich eine Halterung 76 sowie eine Halterung 78. Eine Verstärkerplatte 80 dient zur Versteifung der Verbindung des oberen Tragarmes 74 mit dem Querrahmen 40.

Das untere Tragteil 72 der Tragvorrichtung 44 weist die vertikalverlaufende Tragplatte 82 mit linken und rechten sich in Längsrichtung der Erntebergungsvorrichtung erstreckenden Tragflächen 84 und 86 auf. An die linke Tragfläche 84 ist eine Halterung 88 angeordnet, die mit einer Halterung 78 zusammenwirkt, die an der Aussenseite des oberen Tragarmes 74 angeschlossen ist. Ein horizontalverlaufender Einstellbolzen 90 ist an das obere Ende der Tragplatte 82 stirnseitig angeschweisst und erstreckt sich durch eine winkelförmige Halterung 76. Der Stellbolzen 90 weist beiderseits des Steges der Halterung 76 Muttern 94 auf. Die Halterung 88 ist über einen Einstellbolzen 92 mit der Halterung 78 verbunden, wobei der Einstellbolzen an der Halterung 78 mittels weiterer Muttern 94 beiderseits der Halterung gesichert ist. Mittels der Einstellbolzen 90 und 92 ist eine vertikale und eine horizontale Verstellung der Tragplatte 82 am Tragarm 74 möglich. Am vorderen unteren Ende des Tragarmes 74 sowie an dem oberen Ende der Tragplatte 82 befinden sich zwei untereinander fluchtende Schlitzführungen 98, durch die sich Befestigungselemente 96 erstrekken. Die Befestigungselemente 96 können als Schraubenbolzen ausgebildet sein, die nach Lösen eine Vertikal- sowie eine Horizontalverstellung der Tragplatte 82 am Tragarm 74 gestattet, nachdem hierzu auch die Muttern 94 der Einstellbolzen 92 und 90 entsprechend gelöst worden sind.

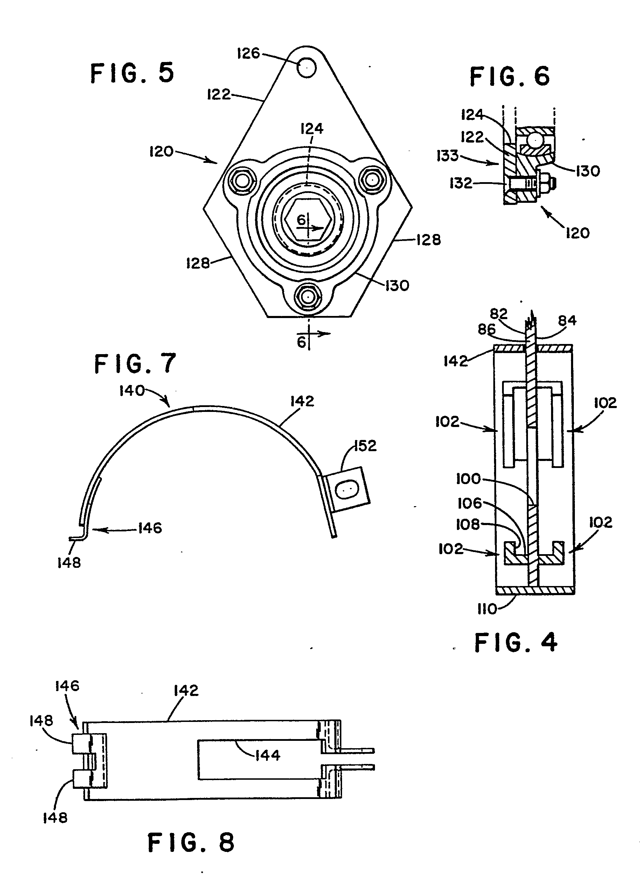

Am unteren Ende der Tragplatte 82 befindet sich eine Bohrung 100 (Fig. 4), die von zwei gegenüberliegenden Tragelementen 102 flankiert wird. Die beiden Tragelemente 102 sind an den Tragflächen 84 und 86 angeschlossen. Ein jedes Tragelement 102 ist mit Bezug auf eine nach vorne und oben schrägverlaufende Mittelebene 104 symmetrisch angeordnet. Die Mittelebene 104 erstreckt sich durch den Mittelpunkt der Bohrung 100 und durch zwei diametral gegenüberliegende Anschlussbohrungen 105 (Fig. 3). Ein jedes Tragelement 102 besteht aus einem Boden 106 sowie aus einer Arretierungslippe 108. Die beiden Tragelemente 102 laufen in Richtung des Bodens 34 zusammen.

Am unteren Ende der Tragplatte 82 befindet sich konzentrisch zur Bohrung 100 eine halbkreisförmige Abdeckvorrichtung 110, die mit Bezug auf die Mittelebene 104 symmetrisch ausgerichtet ist und die sich beiderseits axial zu den Tragflächen 84 und 86 der Tragplatte 82 erstreckt. Die Abdeckvorrichtung 110 weist zwei beiderseits der Tragplatte 82 vorgesehene Längsschlitze 112 auf (Fig. 3).

Das innere Ende des Schneckeneinzugteils 30 ist drehbar und lösbar in einem Lager, das als Wälzlager 120 ausgebildet ist und zu dem eine Lagerplatte 122 (Fig. 5) gehört, aufgenommen, die mit einer Bohrung 124 und einer Anschlussbohrung 126 ausgerüstet ist und zwei Tragkanten bzw. Führungsflächen 128 aufweist, die mit Bezug auf die durch die Bohrung 124 und die Bohrung 126 verlaufende Mittellinie symmetrisch ausgerichtet sind und mit dem Boden 106 des Tragelementes 102 zusammenwirken. Wird also beispielsweise das Wälzlager 120 in die Tragelemente 102 eingeschoben, so verlaufen die entsprechenden Tragkanten 128 parallel zum Boden 106, wobei die durch die Bohrung 126 und die Bohrung 124 verlaufende Mittelebene auf der Mittelebene 104 verläuft. Wie aus Fig. 6 hervorgeht, weist die Lagerplatte 122 im Bereich der Bohrung 124 einen koaxial zur Bohrung 124 ausgerichteten Lagerbock 130 auf, der über Schraubenbolzen 132 mit der Stirnfläche der Lagerplatte 122 verbunden ist und der zur Aufnahme des Wälzlagers 120 dient, das koaxial zur Bohrung 124 ausgerichtet ist, dabei liegt der Lagerbock 130 bei 133 gegen die Oberfläche der Tragplatte 122 an.

Wie aus Fig. 2 hervorgeht, ist auf dem Zapfen 54 zwischen dem Stirnflansch 52 und der Stirnseite des Wälzlagers 120 im Lagerbock 130 eine Distanzbuchse 134 vorgesehen, so dass der Lagerbock 130 mit dem zugehörigen Wälzlager, das beispielsweise eine Sechskantbohrung aufweisen kann, auf das freie Ende des Zapfens 54 aufgeschoben werden kann. Auf diese Weise wird eine teleskopartige Verbindung zwischen der Tragplatte 122 und dem Schneckeneinzugteil 30 hergestellt. Bevor jedoch das Schneckeneinzugteil 30 in der Erntebergungsvorrichtung eingebaut werden kann, wird die Haube 47 in eine Stellung gemäss 47' verschwenkt, so dass ein ungehinderter Zugang zum Schneckeneinzugteil 30, 32 möglich ist, insbesondere zur Tragvorrichtung 44. Das äussere Ende des Schneckeneinzugteiles 30 bzw. 32 wird dann in der Seitenwand 42 verschiebbar aufgenommen. Danach wird das innere Ende des Schneckeneinzugteils nach unten und hinten verschwenkt, bis die Tragkanten 128 der Lagerplatte 122 zwischen den Boden 106 und die Arretierungslippe 108 der Tragelemente 102 geschoben werden können und die Anschlussbohrung 126 der Lagerplatte 122 mit der Anschlussbohrung 105 am unteren Ende der Tragplatte 82 fluchtet. Im eingebauten Zustand liegt dann die Oberfläche der Lagerplatte 122 gegen die Tragfläche 84 des unteren Teils der Tragplatte 82 an. Wenn die Tragkanten 128 gegen die Böden 106 anliegen, ist eine Axialverstellung der Lagerplatte 122 mit Bezug auf die Tragplatte 82 in eine Richtung begrenzt. Durch die Arretierungslippe 108 wird auch eine Axialverstellung der Lagerplatte 122 verhindert.

Die teleskopartige Aufnahme des sechskantförmigen Zapfens 54 im Wälzlager 120 ermöglicht eine bestimmte Verstellung des Schneckeneinzugsteiles 30 in Axialrichtung, um somit Fertigungstoleranzen ausgleichen zu können, so dass hierdurch die Einwirkung von Axialkräften oder Schubkräften auf das Schneckeneinzugsteil 30 oder die Tragvorrichtung 44 verhindert werden kann. Durch die Verwendung der Distanzbuchse 134 wird sichergestellt, dass der Schneckenkern 50 nicht gegen die Tragfläche 84 zur Anlage kommt.

Wenn beide Schneckeneinzugsteile 30 und 32 auf diese Weise eingebaut sind, kann der obere Teil 142 der Abdeckvorrichtung 140 montiert werden. Der Teil 142 ist mit einem mittig ausgerichteten Schlitz 144 im hinteren Bereich versehen, der zur Aufnahme des unteren Teils der Tragplatte 82 und des oberen Teils der Lagerplatte 122 dient. An dem vorderen unteren Ende des Teils 142 befindet sich ein hakenförmiges Anschlusselement 146, das mit einer Lasche bzw. einem Hakenteil 148 ausgerüstet ist, der in den Schlitz 112 der Abdeckvorrichtung 110 einsteckbar ist. Das obere Teil 142 der Abdeckvorrichtung 140 weist im Bereich der Stirnkante beiderseits des Schlitzes 144 zwei Ösen 152 mit Längsschlitzen auf, die im eingebauten Zustand der Abdeckvorrichtung 140 koaxial zur Bohrung 154 an der unteren Tragplatte 82 verlaufen. Im eingebauten Zustand wirkt das obere Teil 140 mit dem unteren Teil der Abdeckvorrichtung 110 zusammen, wobei beide Teile ein ringförmiges Gehäuse bilden, das die inneren Enden der entsprechenden Schneckeneinzugsteile 30 und 32 und den zugehörigen Lagerbock 130 koaxial umgeben. Wenn die Schneckeneinzugsteile 30 und 32 eingebaut sind, kann der Schraubenbolzen 156 in die untereinander fluchtenden Bohrungen 126 und 105 der Lagerplatte 122 und der Tragplatte 82 eingeschraubt werden. Der Abstand zwischen dem Aussenumfang der Schneckenwendel 58 und der Oberfläche des Bodens 34 sowie der Stirnkante der Abstreifleiste 38 kann mittels der Einstellbolzen 90 und 92 entsprechend variiert werden. Da keine direkte Verbindung zwischen den aneinander angrenzenden Schneckeneinzugsteilen 30 und 32 besteht, kann eine derartige Einstellung auf einfache Weise durchgeführt werden, ohne dabei die einzelnen Schneckeneinzugsteile zu verspannen bzw. zu beschädigen.

Wie aus Fig. 2 hervorgeht, laufen die Schaufelblätter 60 dicht an der Innenoberfläche der Abdeckvorrichtung 110 und 140 vorbei, wobei der relativ kleine axiale Raum zwischen den inneren Enden 158 der Schaufelblätter 60 und den Schneckenwendeln 58 der Schneckeneinzugsteile 30 und 32 gewährleisten, dass eine einwandfreie Förderwirkung der beiden Schneckeneinzugsteile sichergestellt ist. Um eines der beiden Schneckeneinzugsteile 30 bzw. 32 auszubauen, braucht lediglich die Haube 47 angehoben zu werden und das äussere Wälzlager 62 in der Seitenwand 42 gelöst zu werden. Danach lassen sich die Schraubenbolzen 156 entfernen und der obere Teil 142 der Abdeckvorrichtung 140 abnehmen, so dass dann das innere Ende des Schneckeneinzugsteils 30 bzw. 32 zuerst angehoben werden kann, um dann nach oben und vorne aus der Erntebergungsvorrichtung herausgezogen zu werden.

**Patentansprüche**

1. Erntebergungsmaschine mit einer Erntebergungsvorrichtung, die mindestens zwei Querförderer (30, 32) aufweist, die einenends im Bereich von Seitenwänden (42) der Erntebergungsvorrichtung, anderenends im Bereich der einander zugewandten Enden der beiden Querförderer von je einem Lager (120) drehbar aufgenommen sind, die sich an mindestens einer sich nach oben erstreckenden, an der Erntebergungsvorrichtung angeschlossenen Tragvorrichtung (44) abstützen, dadurch gekennzeichnet, dass jeweils das innenliegende Lager (120) eines Querförderers (30, 32) ein Lagerelement (Lagerplatte 122) aufweist, das quer zur Achse des Querförderers an ein zumindest an einer Seite offenes, als Kupplungselement ausgebildetes Tragelement (102) der Tragvorrichtung (44) heranführbar und in dieses einsetzbar ist.

2. Erntebergungsmaschine nach Anspruch 1, dadurch gekennzeichnet, dass die koaxial zueinander verlaufenden und dicht nebeneinanderliegenden Lager (120) an den innenliegenden Enden der Querförderer (30, 32) durch die Tragvorrichtung (44) getrennt sind und auf Abstand gehalten werden.

3. Erntebergungsmaschine nach einem oder mehreren der vorherigen Ansprüche, dadurch gekennzeichnet, dass die innenliegenden Enden der Querförderer (30, 32) mit sich an Schneckenwendeln (58) des Querförderers anschliessenden und sich radial erstreckenden, bis zur Stirnseite der Tragvorrichtung (44) reichenden Schaufelblättern (60) ausgerüstet sind, die das Erntegut durch eine Einlassöffnung (20) bewegen.

4. Erntebergungsmaschine nach einem oder mehreren der vorherigen Ansprüche, dadurch gekennzeichnet, dass die Tragvorrichtung (44) im Bereich der Einlassöffnung (20) vorgesehen ist, der eine Haube (Abdeckvorrichtung 22) zugeordnet ist, die gelenkig an einem Querrahmen (40) angeschlossen ist und sich nach vorne und unten über den oberen Teil der Einlassöffnung (20) und die Tragvorrichtung (44) erstreckt.

5. Erntebergungsmaschine nach einem oder mehreren der vorherigen Ansprüche, dadurch gekennzeichnet, dass die Lagerelemente je eine Lagerplatte (122) mit mindestens zwei Führungsflächen (Tragkante 128) und die Tragvorrichtung (44) das Kupplungselement mit zwei Anlageflächen (Tragflächen 84, 86) aufweisen, wobei das Kupplungselement (Tragelement 102) in Verbindung mit den Anlageflächen eine Kupplungstasche für die Lagerplatte (122) bildet.

6. Erntebergungsmaschine nach einem oder mehreren der vorherigen Ansprüche, dadurch gekennzeichnet, dass das Kupplungselement (Tragelement 102) mit zwei parallel zu den Führungsflächen (Tragkante 128) verlaufenden Tragflächen (Boden 106) ausgerüstet ist, die von Arretierungslippen (108) und von parallel dazu verlaufenden Tragflächen (84, 86) der Tragvorrichtung (44) begrenzt werden.

7. Erntebergungsmaschine nach einem oder mehreren der vorherigen Ansprüche, dadurch gekennzeichnet, dass die Arretierungslippen (108) mit ihren Tragflächen (Boden 106) und den Tragflächen (84, 86) der Tragvorrichtung (44) zwei Führungsnuten bilden, die divergierend zueinander verlaufen und die Einschubbewegung der Lagerplatte (122) begrenzen.

8. Erntebergungsmaschine nach einem oder mehreren der vorherigen Ansprüche, dadurch gekennzeichnet, dass die Tragvorrichtung (44) mit einer Arretierungsvorrichtung (Schraubenbolzen 156) für die Lagerplatte (122) versehen ist.

9. Erntebergungsmaschine nach einem oder mehreren der vorherigen Ansprüche, dadurch gekennzeichnet, dass die Arretierungsvorrichtung (Schraubenbolzen 156) ausserhalb des Aussenumfangs eines Schneckenkerns (50) des Querförderers (30, 32) vorgesehen ist.

10. Erntebergungsmaschine nach einem oder mehreren der vorherigen Ansprüche, dadurch gekennzeichnet, dass die durch die beiden Führungsnuten verlaufende Mittellinie (104) mit einer Rückwand (36) der Erntebergungsvorrichtung einen nach oben offenen, spitzen Winkel bildet und die Lagerplatte (122) beim Kupplungsvorgang auf der gleichen Ebene wie die Mittellinie verstellbar ist.

11. Erntebergungsmaschine nach einem oder mehreren der vorherigen Ansprüche, dadurch gekennzeichnet, dass der Querförderer (30 bzw. 32) an seinem inneren Ende mit einem Wellenzapfen (54) versehen ist, der sich teleskopartig in das Lagerelement (Lagerplatte 122) erstreckt.

12. Erntebergungsmaschine nach einem oder mehreren der vorherigen Ansprüche, dadurch gekennzeichnet, dass an der Tragvorrichtung (44) eine ringförmige, die inneren Enden des Schnekkenkerns (50) überdeckende Abdeckvorrichtung (110) angeordnet ist, die einen oberen abnehmbaren Teil (140) aufweist, der eine Montageöffnung abdeckt.

13. Erntebergungsmaschine nach einem oder mehreren der vorherigen Ansprüche, dadurch gekennzeichnet, dass der obere Teil (140) der Abdeckvorrichtung (110) zur Aufnahme der Tragvorrichtung (44) einenends mit einem Schlitz (144) sowie einer Öse (152) und anderenends mit einem Hakenteil (148) versehen ist, wobei der Hakenteil (148) in ein am unteren Teil (142) der Abdeckvorrichtung (110) vorgesehenes Aufnahmeteil einsteckbar ist.

14. Erntebergungsmaschine nach einem oder mehreren der vorherigen Ansprüche, dadurch gekennzeichnet, dass in der Lagerplatte (122) ein Wälzlager (120) vorgesehen ist, dessen Aussenring fest mit der Lagerplatte (122) verbunden ist, wobei die Lagerplatte (122) zwischen der Stirnseite des Querförderers (30, 32) und der Stirnseite der Tragvorrichtung (44) vorgesehen ist.

15. Erntebergungsmaschine nach einem oder mehreren der vorherigen Ansprüche, dadurch gekennzeichnet, dass die Tragvorrichtung (44) aus einem oberen, an den Querrahmen (40) angeschlossenen Tragarm (74) und einer unteren vertikalen Tragplatte (82) besteht, die über Stellmittel in vertikaler und horizontaler Ebene am oberen Tragarm verstellbar gelagert ist.

16. Erntebergungsmaschine nach einem oder mehreren der vorherigen Ansprüche, dadurch gekennzeichnet, dass die äusseren Enden des Querförderers (30, 32) mittels Wälzlagern (62) in den Seitenwänden (42) der Erntebergungsvorrichtung lösbar bzw. einsteckbar gelagert sind.

## Claims

1. A crop pick-up machine having a crop pick-up device which has at least two transverse conveyors (30, 32) which are rotatably carried at one end in the region of side walls (42) of the crop pick-up device and at the other end in the region of the mutually facing ends of the two transverse conveyors, by respective bearings (120) which are supported on at least one upwardly extending carrier means (44) which is connected to the crop pick-up device, characterised in that the respective inward bearing (120) of a transverse conveyor (30, 32) has a bearing element (bearing plate 122) which can be advanced, transversely to the axis of the transverse conveyor, to a carrier element (102) of the carrier means (44), said carrier element being open at least at one side and being formed as a coupling element, and can be fitted into said carrier element.

2. A crop pick-up machine according to claim 1 characterised in that the bearings (120) which extend in mutually coaxial relationship and which are disposed in close juxtaposition, at the inward ends of the transverse conveyors (30, 32), are separated by the carrier means (44) and held at a spacing.

3. A crop pick-up machine according to one or more of the preceding claims characterised in that the inward ends of the transverse conveyors (30, 32) are provided with radially extending shovel blades (60) which adjoin screw pitches (58) of the transverse conveyor and which extend as far as the face of the carrier means (44), said blades moving the crop material through an intake opening (20).

4. A crop pick-up machine according to one or more of the preceding claims characterised in that the carrier means (44) is provided in the region of the intake opening (20) with which there is associated a hood (cover means 22) which is pivotally connected to a transverse frame (40) and which extends forwardly and downwardly over the upper part of the intake opening (20) and the carrier means (44).

5. A crop pick-up machine according to one or more of the preceding claims characterised in that the bearing elements each have a bearing plate (122) with at least two guide surfaces (carrier edge 128) and the carrier means (44) has the coupling element with two contact surfaces (carrier surfaces 84, 86), wherein the coupling element (carrier element 102), in conjunction with the contact surfaces, forms a coupling pocket for the bearing plate (122).

6. A crop pick-up machine according to one or more of the preceding claims characterised in that the coupling element (carrier element 102) is provided with two carrier surfaces (bottom 106) which extend parallel to the guide surfaces (carrier edge 128) and which are defined by arresting lips (108) and carrier surfaces (84, 86), extending parallel thereto, of the carrier means (44).

7. A crop pick-up machine according to one or more of the preceding claims characterised in that the arresting lips (108) with their carrier surfaces (bottom 106) and the carrier surfaces (84, 86) of the carrier means (44) form two guide grooves which extend in divergent relationship and which limit the insertion movement of the bearing plate (122).

8. A crop pick-up machine according to one or more of the preceding claims characterised in that the carrier means (44) is provided with an arresting means (screw bolt 156) for the bearing plate (122).

9. A crop pick-up machine according to one or more of the preceding claims characterised in that the arresting means (screw bolt 156) is provided outside the outside periphery of a screw core portion (50) of the transverse conveyor (30, 32).

10. A crop pick-up machine according to one or more of the preceding claims characterised in that the centre line (104) which passes through the two guide grooves, with a rear wall (36) of the crop pick-up means, forms an upwardly open acute angle and the bearing plate (122), in the coupling operation, can be displaced on the same plane as the centre line.

11. A crop pick-up machine according to one or more of the preceding claims characterised in that at its inner end the transverse conveyor (30, 32 respectively) is provided with a shaft journal (54) which extends telescopically into the bearing element (bearing plate 122).

12. A crop pick-up machine according to one or more of the preceding claims characterised in that disposed on the carrier means (44) is an annular cover means (110) which covers over the inner ends of the screw core portion (50) and which has an upper removable portion (140) which covers an assembly opening.

13. A crop pick-up machine according to one or more of the preceding claims characterised in that the upper portion (140) of the cover means (110), for receiving the carrier means (44), is provided at one end with a slot (144) and an eye (152) and at the other end with a hook portion (148), wherein the hook portion (148) can be inserted into a receiving portion provided on the lower portion (142) of the cover means (110).

14. A crop pick-up machine according to one or more of the preceding claims characterised in that disposed in the bearing plate (122) is a roller bearing (120) whose outer race is fixedly connected to the bearing plate (122), wherein the bearing plate (122) is provided between the end of the transverse conveyor (30, 32) and the end of the carrier means (44).

15. A crop pick-up machine according to one or more of the preceding claims characterised in that the carrier means (44) comprises an upper carrier arm (74) connected to the transverse frame (40) and a lower vertical carrier plate (82) which is mounted displaceably by way of adjustment means in a vertical and a horizontal plane on the upper carrier arm.

16. A crop pick-up machine according to one or more of the preceding claims characterised in that the outer ends of the transverse conveyor (30, 32) are releasably and insertibly mounted by means of roller bearings (62) in the side walls (42) of the crop pick-up means.

## Revendications

1. Machine de récolte comportant un ensemble de récolte qui comprend au moins deux transporteurs transversaux (30, 32) monté à rotation par une extrémité au voisinage des parois latérales (42) de l'ensemble de récolte et par leur autre extrémité au voisinage des extrémités orientées l'une vers l'autre des deux transporteurs transversaux, chaque fois par un palier (120), ces paliers prenant appui sur au moins un dispositif de support (44) s'étendant vers le haut et se raccordant à l'ensemble de récolte, caractérisée en ce que le palier (120) chaque fois situé à l'intérieur d'un transporteur transversal (30, 32) comprend un élément de palier (flasque de palier 122) qui, transversalement à l'axe du transporteur transversal, peut être rapproché d'un élément de support (102) du dispositif de support (44) ouvert d'au moins un côté et se présentant sous la forme d'un élément d'accouplement, et qui peut être inséré dans cet élément de support.

2. Machine de récolte suivant la revendication 1, caractérisée en ce que les paliers (120) s'étendant coaxialement entre eux et placé au voisinage immédiat l'un de l'autre sont séparés aux extrémités intérieures des transporteurs transversaux (30, 32) par le dispositif de support (44) et sont maintenus écarté par celui-ci.

3. Machine de récolte suivant l'une quelconque des revendications précédentes, caractérisé en ce que les extrémités intérieures des transporteurs transversaux (30, 32) sont équipées de pales (60) se raccordant aux filets (58) du transporteur transversal et s'étendant radialement jusqu'à la face terminale du dispositif de support (44), ces pales déplaçant les produits de récolte pour les faire passer à travers un orifice d'entrée (20).

4. Machine de récolte suivant l'une quelconque des revendications précédentes, caractérisée en ce que le dispositif de support (44) est prévu au voisinage de l'orifice d'entrée (20), auquel est conjugué un capot (dispositif de recouvrement 22) lequel est relié à articulation à un bâti transversal (40) et qui s'étend vers l'avant et vers le bas au-dessus de la partie supérieure de l'orifice d'entrée (20) et du dispositif de support (44).

5. Machine de récolte suivant l'une quelconque des revendications précédentes, caractérisée en ce que les éléments de palier comportent chacun un flasque de palier (122) présentant au moins deux surfaces de guidage (bord de support 128), tandis que le dispositif de support (44) comprend un élément d'accouplement présentant deux surfaces d'application (surfaces de support 84, 86), l'élément d'accouplement (élément de support 102) formant en combinaison avec les surfaces d'application un alvéole d'accouplement pour le flasque de palier (122).

6. Machine de récolte suivant l'une quelconque des revendications précédentes, caractérisée en ce que l'élément d'accouplement (élément de support 102) est muni de deux surfaces de support (fond 106) s'étendant parallèlement aux surfaces de guidage (bord de support 128), ces surfaces de support étant limitées par des lèvres d'arrêt (108) et par des surfaces de support (84, 86) du dispositif de support (44) parallèles à ces lèvres d'arrêt.

7. Machine de récolte suivant l'une quelconque des revendications précédentes, caractérisée en ce que les lèvres d'arrêt (108) forment par leurs surfaces de support (fond 106) et avec les surfaces de support (84, 86) du dispositif de support (44) deux rainures de guidage qui vont en divergeant l'une par rapport à l'autre et qui limitent le mouvement d'engagement du flasque de palier (122).

8. Machine de récolte suivant l'une quelconque des revendications précédentes, caractérisée en ce que le dispositif de support (44) est muni d'un dispositif de blocage (boulon 156) pour le flasque de palier (122).

9. Machine de récolte suivant l'une quelconque des revendications précédentes, caractérisé en ce que le dispositif de blocage (boulon 156) est disposé à l'extérieur de la périphérie extérieure d'un noyau ou fût de vis (50) du transporteur transversal (30, 32).

10. Machine de récolte suivant l'une quelconque des revendications précédentes, caractérisée en ce que la ligne médiane (104) passant par les deux rainures de guidage forme avec une paroi arrière (36) de l'ensemble de récolte un angle aigu ouvert en direction du haut et en ce que le flasque de palier (122) est, lors du processus d'accouplement, déplaçable dans le même plan de cette ligne médiane.

11. Machine de récolte suivant l'une quelconque des revendications précédentes, caractérisée en ce que le transporteur transversal (30, 32) est muni à son extrémité intérieure d'un bout d'arbre (54) qui s'étend de façon télescopique dans l'élément de palier (flasque de palier 122).

12. Machine de récolte suivant l'une quelconque des revendications précédentes, caractérisée en ce qu'il est prévu, sur le dispositif de support (44), un dispositif de capotage annulaire (110) recouvrant les extrémités intérieures des noyaux de vis (50), ce dispositif présentant une partie supérieure amovible (140) qui obture un orifice de montage.

13. Machine de récolte suivant l'une quelconque des revendications précédentes, caractérisée en ce que la partie supérieure (140) du dispositif de capotage (110) est munie, pour la réception du dispositif de support (44), à une extrémité d'une fente (144), ainsi que d'un oeilleton (152), et à son autre extrémité d'une partie en forme de crochet (148), cette partie en forme de crochet (148) pouvant être engagée dans une zone formant logement prévue à la partie inférieure (142) du dispositif de capotage (110).

14. Machine de récolte suivant l'une quelconque des revendications précédentes, caractérisé en ce qu'il est prévu, dans le flasque de palier (122), un palier à roulement (120) dont la bague extérieure est rendue solidaire de ce flasque de palier (122), ce dernier étant disposé entre la face terminale du transporteur transversal (30, 32) et la face terminale du dispositif de support (44).

15. Machine de récolte suivant l'une quelconque des revendications précédentes, caractérisée en ce que le dispositif de support (44) est constitué par un bras de support supérieur (74) raccordé au bâti transversal (40) et par une plaque de support verticale inférieure (82) qui est montée de façon déplaçable sur le bras de support supérieur dans le plan vertical et ·dans le plan horizontal, au moyen d'organes de réglage.

16. Machine de récolte suivant l'une quelconque des revendications précédentes, caractérisée en ce que les extrémités extérieures du transporteur transversal (30, 32) sont montées de façon amovible ou emboîtable dans les parois latérales (42) de l'ensemble de récolte au moyen de paliers à roulement (62).

FIG. 1

FIG. 2

# FIG. 3

0 044 505

FIG. 5

FIG. 6

FIG. 7

FIG. 4

FIG. 8

17